# FASCICULE DE BREVET EUROPEEN

(11) **EP 1 468 892 B1**
(45) Date de publication et mention de la délivrance du brevet: **15.03.2006**
(21) Numéro de dépôt: 04291008.3
(22) Date de dépôt: 15.04.2004
(51) Int. Cl.: B62B 5/04, B60T 11/04

(54) **Chariot autofreiné de transport de charge**
Selbstbremsender Lasttransportkarren
Self-braking load-transporting carriage

(30) Priorité: 16.04.2003 FR 0304776
(43) Date de publication de la demande: 20.10.2004
(73) Titulaire: Régie Autonome des Transports Parisiens, 75599 Paris Cedex 12 (FR)
(72) Inventeur: Dossard, Christian, 94190 Villeneuve St Georges (FR)
(74) Mandataire: Blot, Philippe Robert Emile

(56) Documents cités:
- DE-A- 19 516 597
- US-A- 1 810 428
- US-A- 1 955 504
- US-A- 2 958 537
- US-B1- 6 237 725

## Description

La présente invention concerne un chariot de transport de charge, du type comportant :
- un châssis de support de la charge,
- des roues reliées au châssis et adaptées pour supporter ce châssis ;
- des moyens de freinage des roues adaptés pour bloquer la rotation des roues autour de leur axe, lesdits moyens de freinage comprenant, pour au moins certaines des roues, un organe de frottement sur la roue, déplaçable entre une position bloquante dans laquelle il forme une zone de contact frottant avec la roue et une position écartée dans laquelle il est distant de la roue, et
- des moyens de commande du déplacement des organes de frottement entre leur position écartée et leur position bloquante.

De tels chariots, couramment appelés chariots autofreinés, sont utilisés pour la manutention de charges lourdes dans des environnements considérés comme dangereux, tels que des chantiers. Pour garantir la sécurité de l'utilisateur ainsi que des personnes et des biens présents lors de l'utilisation de ces chariots, ces derniers sont équipés de moyens de freinage adaptés pour bloquer automatiquement les roues de ces chariots, seule l'action volontaire de l'utilisateur devant permettre de neutraliser ces moyens de freinage.

Les chariots autofreinés existants sont généralement équipés de patins de frottement destinés à bloquer les roues par contact frottant sur le bandage extérieur ou les chants latéraux des roues. Selon l'état d'origine et l'évolution de la surface des zones de contact et/ou les dépôts, notamment de graisse ou de poussière, qui peuvent survenir sur ces zones lors de l'utilisation, l'efficacité du freinage varie dans des proportions importantes. Pour contourner ces risques de libération inopportune des roues, certains chariots sont conçus de façon à ce que l'effort d'autofreinage appliqué sur les patins de frottement soit sur-dimensionné, provoquant alors cependant une gène pour l'utilisateur qui doit développer un effort de déblocage important.

De plus, pour les chariots actuels comme, par exemple, le chariot connu du document US 6,237,725 B1, les moyens de commande du déplacement des patins de frottement sont généralement formés par des câbles qui nécessitent des opérations de réglage fréquentes, de tels câbles ayant tendance à la fois à se bloquer par manque de lubrification ou par frottement causé par des courbures serrées imposées aux câbles, ainsi qu'à se détendre. Par ailleurs, en fonction de l'usure des patins de frottement et de la détérioration des câbles de commande, des dissymétries pour les efforts de freinage apparaissent entre les roues.

Le but de la présente invention est de proposer un chariot autofreiné de transport de charge, qui assure l'application d'efforts de freinage sensiblement égaux sur les différentes roues autofreinées du chariot, quel que soit l'état du bandage extérieur et du chant des roues, sans pour autant rendre pénible l'utilisation de ce chariot.

A cet effet, l'invention a pour objet un chariot de transport de charge du type précité, dans lequel chaque organe de frottement est logé essentiellement à l'intérieur de la roue correspondante et les moyens de commande comportent, pour chaque organe de frottement, un levier rigide de déplacement de l'organe de frottement, actionnable par un mécanisme à tiges articulées par rapport au châssis entre une configuration de repos dans laquelle l'organe de frottement est dans sa position bloquante et une configuration de sollicitation dans laquelle l'organe de frottement est dans sa position écartée.

Suivant d'autres caractéristiques de ce chariot, prises isolément ou selon toutes les combinaisons techniquement possibles :
- les roues pourvues d'un organe de frottement comportent chacune un tambour intérieur dont la face interne forme une zone de contact frottant avec l'organe de frottement ;
- chaque organe de frottement comporte une paire de mâchoires reliées au châssis et articulées l'une par rapport à l'autre autour d'un axe sensiblement parallèle à l'axe de rotation de la roue correspondante ;
- chaque levier de déplacement des organes de frottement est pourvu d'une came en appui sur les extrémités libres des mâchoires articulées ;
- le mécanisme à tiges comporte deux tringleries reliant chacune les leviers de déplacement des organes de frottement sur les roues situées d'un même côté du chariot, chacune de ces tringleries étant pourvue d'au moins un compensateur à ressort ;
- les moyens de commande du déplacement des organes de frottement comportent au moins un organe de rappel élastique du mécanisme à tiges depuis sa configuration de sollicitation vers sa configuration de repos, cet organe de rappel étant raccordé au châssis ;
- les moyens de commande du déplacement des organes de frottement comportent en outre des moyens de sollicitation du mécanisme à tiges adaptés pour commander le passage du mécanisme à tiges entre sa configuration de repos et sa configuration de sollicitation ;
- le mécanisme à tiges comporte des biellettes adaptées pour être reliées aux moyens de sollicitation dudit mécanisme et une barre de torsion reliant les deux tringles aux biellettes ;
- les moyens de sollicitation du mécanisme à tiges sont amovibles par rapport au châssis et sont adaptés pour, en fonctionnement, être manoeuvrés au niveau de la partie arrière, par rapport au sens de déplacement du chariot, du châssis ; et
- les moyens de sollicitation du mécanisme à tiges comportent une barre de poussée du chariot selon un sens de déplacement, le mécanisme à tiges étant, dans sa configuration de repos, adapté pour empêcher sa sollicitation par ladite barre de poussée tirée dans un sens opposé au sens de déplacement.

L'invention sera mieux comprise à la lecture de la description qui va suivre, donnée uniquement à titre d'exemple et faite en se référant aux dessins sur lesquels :
- la figure 1 est une vue schématique de dessus d'un chariot selon l'invention ;
- les figures 2 et 3 sont des vues schématiques en perspective du chariot de la figure 1, illustrant respectivement un état de blocage des roues et un état d'avancement du chariot ;
- la figure 4 est une vue à plus grande échelle du détail cerclé IV sur la figure 2 ; et
- la figure 5 est une vue analogue à la figure 1, illustrant une seconde possibilité d'utilisation du chariot de la figure 1.

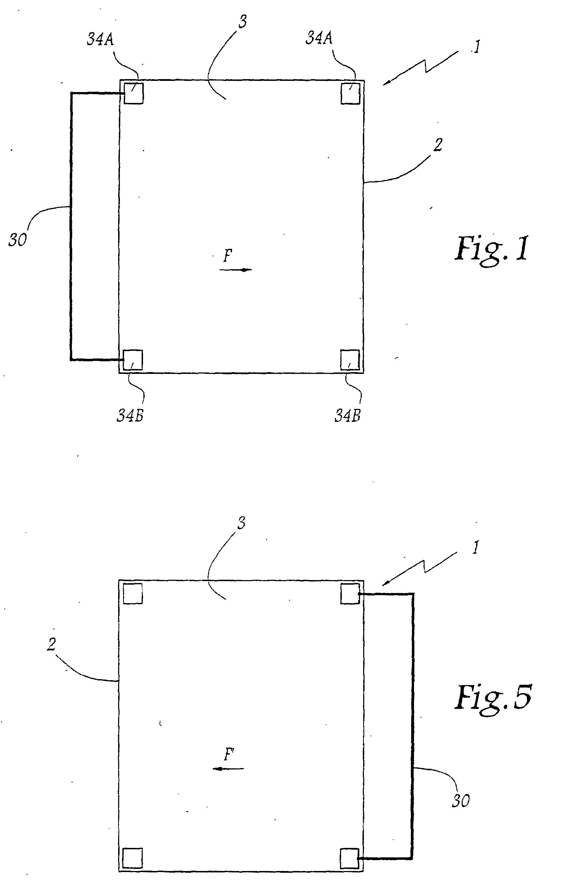

Sur la figure 1 est représenté un chariot 1 de transport de charge. Ce chariot comporte un châssis 2 comprenant une plate-forme 3 qui délimite, du côté opposé au sol sur lequel est destiné à reposer le chariot, une surface sensiblement plane de stockage de la charge transportée.

Le chariot 1 est destiné à être déplacé suivant le sens de la flèche F, par rapport à laquelle le chariot 1 sera par la suite décrit. Plus précisément, en regard des figures 1 à 3, la description du chariot 1 sera orientée selon la flèche F, les côtés considérés comme avant, arrière, gauche et droit du chariot étant représentés respectivement dans les parties droite, gauche, supérieure et inférieure de ces figures.

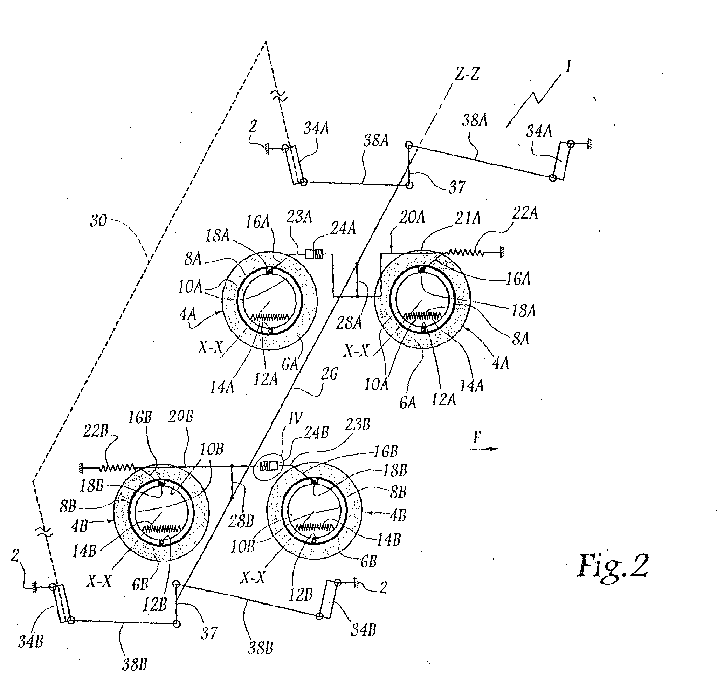

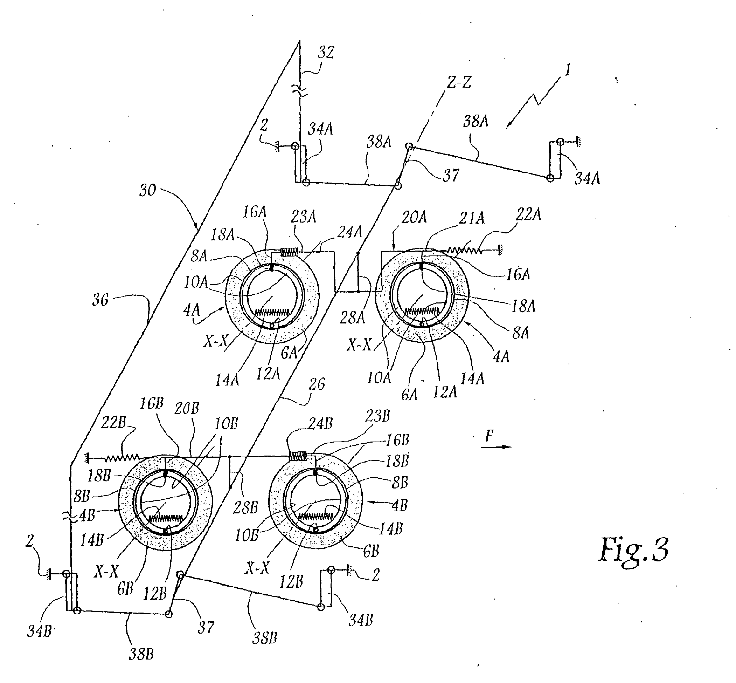

Sur les figures 2 et 3, le châssis est figuré par les symboles référencés 2 et la plate-forme 3 a été omise, de façon à rendre visible les éléments disposés au-dessous de cette plate-forme, c'est-à-dire entre la plate-forme et le sol. Plus précisément, le chariot 1 comporte quatre roues évidées d'axes X-X, deux roues étant référencées 4A sur le côté gauche du chariot et les deux autres roues étant référencées 4B sur le côté droit.

Chaque roue 4A, 4B est formée d'un bandage extérieur 6A, 6B, avantageusement souple, et d'un tambour intérieur métallique 8A, 8B solidaire du bandage. De plus chaque roue est pourvue de moyens de freinage adaptés pour bloquer la rotation de cette roue autour de son axe X-X.

Ces moyens sont logés essentiellement à l'intérieur de l'évidement central de chaque roue 4A, 4B et comportent pour chaque roue une paire de mâchoires 10A, 10B disposées à l'intérieur des tambours 8A, 8B. Les mâchoires 10A, 10B sont articulées l'une par rapport à l'autre autour d'un axe 12A, 12B qui s'étend parallèlement à l'axe X-X. De la sorte, les mâchoires sont déplaçables entre une position bloquante représentée sur la figure 2, dans laquelle elles forment des zones de contact frottant avec ce tambour, et une position écartée représentée sur la figure 3, dans laquelle elles sont distantes du tambour correspondant.

Les moyens de freinage comportent également, pour chaque roue 4A, 4B, un ressort de traction 14A, 14B qui tend à rappeler l'une vers l'autre les mâchoires 10A, 10B.

Pour commander l'actionnement des moyens de freinage, chaque roue 4A, 4B du chariot 1 est équipée d'un levier rigide 16A, 16B qui s'étend le long du chant du bandage extérieur 6A, 6B correspondant. Une première extrémité de chaque levier forme une came 18A, 18B de forme ovoïdale, interposée entre les extrémités libres des mâchoires articulées 10A, 10B. L'extrémité opposée de chaque levier est directement articulée sur une tringlerie 20A, 20B reliée au châssis 2 par un ressort de traction 22A, 22B. La tringlerie 20A de la partie gauche du chariot est reliée par le ressort 22A à la partie avant du châssis 2, tandis que la tringlerie 20B de la partie droite du chariot est reliée par le ressort 22B à la partie arrière du châssis.

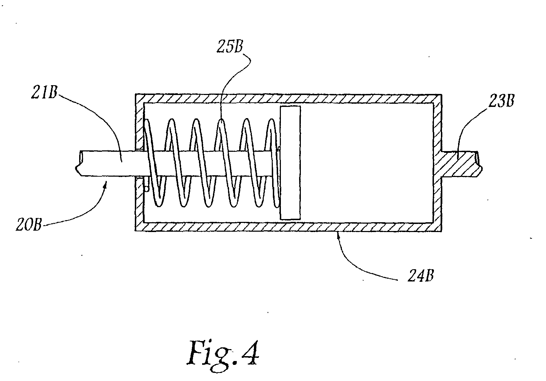

Chaque tringlerie 20A, 20B comporte, d'une part, une première tringle rigide 21A, 21B articulée sur l'un des leviers 16A, 16B et sur laquelle est fixé le ressort 22A, 22B, et, d'autre part, une seconde tringle rigide 23A, 23B articulée sur l'autre levier. Ces deux tringles 21A et 23A ou 21B et 23B sont reliées l'une à l'autre par un compensateur à ressort 24A, 24B représenté plus en détail sur la figure 4, adapté pour contre-balancer les déficiences qui pourraient empêcher le bon fonctionnement de la tringlerie, comme expliqué plus loin.

Chaque compensateur, par exemple le compensateur 24B détaillé sur la figure 4, est équipé d'un ressort 25B interposé entre une plaque d'extrémité de la première tringle 21B et l'extrémité percé du corps du compensateur qui forme l'extrémité correspondante de la seconde tringle 23B. Le compensateur est ainsi adapté pour transmettre un effort d'entraînement axial depuis la première tringle 21B à la seconde tringle 23B soit par appui direct de la plaque d'extrémité de la tringle 21B sur l'extrémité du corps du compensateur lorsque la tringle 21B est sollicitée pour libérer les roues des mâchoires de freinage, soit par l'intermédiaire du ressort 25B.

Les deux tringleries 20A et 20B sont reliées l'une à l'autre par une barre de torsion 26, d'axe Z-Z sensiblement parallèle aux axes X-X. Plus précisément, la partie courante de chaque tringle 21A, 21B est équipée d'une fourche 28A, 28B fixée à la barre 26, de sorte que la rotation de cette barre autour de son axe provoque un mouvement essentiellement de translation des tringleries 20A et 20B, suivant des directions respectives opposées et dirigées d'avant en arrière par rapport au chariot.

La barre 26 est disposée au-dessous de la partie courante de la tringle 21B tandis qu'elle est située au-dessus de la partie courante en forme de U de la tringle 21A.

Pour permettre l'entraînement en rotation de la barre de torsion 26, le chariot 1 est muni d'une barre de commande rapportée 30 en forme de U. Plus précisément et comme représenté sur la figure 3, cette barre 30 est formée de deux branches latérales parallèles 32 adaptées pour être reçues et immobilisées dans des fourreaux 34A, 34B du châssis 2, et d'une branche transversale 36 de longueur sensiblement égale à la largeur du chariot 1. Les formes de la section des fourreaux 34A, 34B et des branches 32 sont par exemple sensiblement complémentaires. Pour permettre la commande de la barre de torsion 26 par la barre 30, les fourreaux sont articulés par rapport au châssis 2 et sont reliés aux extrémités en T 37 de la barre 26 par des biellettes 38A, 38B articulées à la fois par rapport à la barre de torsion et au fourreau correspondant. Avantageusement, pour provoquer la libération du freinage des roues par sollicitation de la barre 26, les fourreaux 34A, 34B ne sont basculables que vers l'avant par rapport au châssis, de sorte que la traction du chariot vers l'arrière en utilisant la barre de commande 30 montée au niveau du front arrière du chariot est rendue impossible. En d'autres termes, il n'est pas possible de faire marche arrière.

L'utilisation du chariot 1 est la suivante :

Initialement, on considère que le chariot 1 est dans son état de la figure 2, c'est-à-dire que les quatre roues 4A et 4B sont bloquées en rotation par les paires de mâchoire 10A et 10B qui sont reliées au châssis 2 par les axes 12A, 12B et les cames 18A, 18B et qui sous l'effet de l'action des ressorts 22A et 22B sont en position bloquante. Le chariot 1 peut alors être chargé et/ou déchargé sans risque.

Lorsque l'utilisateur souhaite déplacer le chariot suivant la flèche F, il équipe le chariot 1 de la barre de commande 30. Pour ce faire, il introduit les extrémités libres de ses branches 32 à l'intérieur d'un des fourreaux 34A de la partie gauche du chariot et d'un des fourreaux 34B de la partie droite, en plaçant la barre de commande dans la partie arrière, par rapport au sens de la flèche F des figures 1 à 3, du chariot. La barre 30 ainsi installée est représentée en pointillés sur la figure 2.

Comme indiqué sur la figure 3, en appliquant un effort de poussée P dirigé vers l'avant sur la branche transversale 36 de la barre 30 sur laquelle viennent s'appliquer les mains de l'utilisateur, ce dernier provoque le basculement des fourreaux 34A, 34B qui entraînent les biellettes 38A, 38B, provoquant alors la rotation de la barre de torsion 26. La tringle 21A s'écarte de la partie avant du châssis 2, alors que la tringle 21 B s'écarte de la partie arrière du châssis, provoquant le basculement des leviers 16A et 16B articulés sur ces tringles. Le mouvement des tringles 21A et 21B est transmis directement aux tringles 23A et 23B, et par là aux bielles 16A et 16B articulées sur ces tringles.

Le déplacement des cames 18A, 18B ainsi obtenu permet aux mâchoires 10A et 10B d'être rappelées élastiquement l'une vers l'autre par les ressorts de rappel 14A, 14B, ce qui libère les roues 4A et 4B. En poursuivant son effort de poussée P, l'utilisateur déplace, suivant le sens de la flèche F, l'ensemble du chariot 1. Ainsi, suivant un même mouvement, l'utilisateur supprime le freinage et fait avancer le chariot.

Une fois le chariot déplacé jusqu'à l'endroit désiré, l'utilisateur relâche son effort de poussée P. Par rappel élastique des ressorts de traction 22A et 22B, les tringles 21A et 21B provoquent, au niveau des compensateurs 24A et 24B, la compression des ressorts 25A et 25B qui transmettent élastiquement aux tringles 23A et 23B un effort d'entraînement suffisant pour que les tringleries 20A et 20B reprennent leur configuration initiale de la figure 2, permettant à nouveau le blocage des roues sous l'effet des ressorts de compression 22A, 22B qui basculent les leviers 16A, 16B de sorte que les cames 18A, 18B écartent les mâchoires de frottement.

Le chariot selon l'invention assure ainsi un freinage efficace des roues, quel que soit l'état de la surface extérieure ou du chant de ces roues, car les mâchoires de frottement sont appliquées sur la face intérieure des tambours 8A, 8B. De plus, l'utilisation de tiges rigides, telles que les tringles 21A, 21B, 23A et 23B, la barre 26, les biellettes 38A et 38B et les fourreaux 34A et 34B, permet de disposer de moyens de commande fiables et résistants dans le temps, à la différence de câbles dont la détérioration est souvent rapide. De plus, en équipant ces moyens de commande de compensateurs, on évite que le mouvement de blocage d'une première roue assuré par le serrage du bandage de frein dans cette roue ne provoque que le serrage partiel du bandage dans la seconde roue située du même côté que la première. La liaison élastique de compensation ainsi formée assure que la force de freinage appliquée sur chaque roue par les tringleries reste sensiblement équivalente d'une roue à l'autre, et ce durant toute la vie du chariot, par rattrapage des tolérances de montage et/ou des différences d'usure des mâchoires.

L'utilisation de la même barre 30 pour à la fois commander les moyens de freinage et pousser le chariot 1 lors de ses déplacement se révèle particulièrement pratique. A cet effet, l'ergonomie de cette barre est optimisée pour faciliter l'application de l'effort de poussée P par l'utilisateur.

Par ailleurs, l'existence de deux paires de fourreaux 34A-34B disposées de chaque côté frontal du chariot permet l'utilisation de ce dernier suivant des sens de déplacement opposés, en changeant de côté la barre 30. La figure 5, sur laquelle la flèche F' indique le sens de déplacement, illustre cette possibilité. On s'assure de la sorte que le chariot se trouve toujours devant l'utilisateur pour des raisons de sécurité.

Divers aménagements et variantes au chariot décrit précédemment sont en outre envisageables. A titre d'exemple, seules deux ou trois des quatre roues du chariot 1 peuvent être équipées de moyens de freinage, la ou les roues restantes n'étant pas suffisantes pour permettre le déplacement du chariot sans l'action volontaire de l'utilisateur. De même, le chariot peut être pourvu de plus de quatre roues.

## Revendications

1. Chariot de transport de charge, du type comportant :
- un châssis (2) de support de la charge,
- des roues (4A, 4B) reliées au châssis (2) et adaptées pour supporter ce châssis ;
- des moyens de freinage des roues adaptés pour bloquer la rotation des roues autour de leur axe (X-X), lesdits moyens de freinage comprenant, pour au moins certaines des roues, un organe (10A, 10B) de frottement sur la roue (4A, 4B), déplaçable entre une position bloquante dans laquelle il forme une zone de contact frottant avec la roue et une position écartée dans laquelle il est distant de la roue, et
- des moyens de commande du déplacement des organes de frottement entre leur position écartée et leur position bloquante,
dans lequel chaque organe de frottement (10A, 10B) est logé essentiellement à l'intérieur de la roue correspondante (4A, 4B), **caractérisé en ce que** les moyens de commande comportent, pour chaque organe de frottement (10A, 10B), un levier rigide (16A, 16B) de déplacement de l'organe de frottement, articulé sur un mécanisme à tiges (20A, 20B, 28A, 28B, 26, 34A, 34B, 38A, 38B) articulées par rapport au châssis (2) entre une configuration de repos dans laquelle l'organe de frottement est dans sa position bloquante et une configuration de sollicitation dans laquelle l'organe de frottement est dans sa position écartée.

2. Chariot suivant la revendication 1, **caractérisé en ce que** les roues (4A, 4B) pourvues d'un organe de frottement (10A, 10B) comportent chacune un tambour intérieur (8A, 8B) dont la face interne forme une zone de contact frottant avec l'organe de frottement.

3. Chariot suivant la revendication 1 ou 2, **caractérisé en ce que** chaque organe de frottement comporte une paire de mâchoires (10A, 10B) reliées au châssis (2) et articulées l'une par rapport à l'autre autour d'un axe (12A, 12B) sensiblement parallèle à l'axe (X-X) de rotation de la roue correspondante (4A, 4B).

4. Chariot suivant la revendication 3, **caractérisé en ce que** chaque levier (16A, 16B) de déplacement des organes de frottement (10A, 10B) est pourvu d'une came (18A, 18B) en appui sur les extrémités libres des mâchoires articulées.

5. Chariot suivant l'une quelconque des revendications précédentes, **caractérisé en ce que** le mécanisme à tiges comporte deux tringleries (20A, 208) reliant chacune les leviers (16A, 16B) de déplacement des organes de frottement sur les roues situées d'un même côté du chariot (1), chacune de ces tringleries étant pourvue d'au moins un compensateur à ressort (24A, 24B).

6. Chariot suivant l'une quelconque des revendications précédentes, **caractérisé en ce que** les moyens de commande du déplacement des organes de frottement (10A, 10B) comportent au moins un organe (22A, 22B) de rappel élastique du mécanisme à tiges (20A, 20B, 28A, 28B, 26, 34A, 34B, 38A, 38B) depuis sa configuration de sollicitation vers sa configuration de repos, cet organe de rappel étant raccordé au châssis (2).

7. Chariot suivant l'une quelconque des revendications précédentes, **caractérisé en ce que** les moyens de commande du déplacement des organes de frottement (10A, 10B) comportent en outre des moyens (30) de sollicitation du mécanisme à tiges (20A, 20B, 28A, 28B, 26, 34A, 34B, 38A, 38B), adaptés pour commander le passage du mécanisme à tiges (20A, 20B, 28A, 28B, 26, 34A, 34B, 38A, 38B) entre sa configuration de repos et sa configuration de sollicitation.

8. Chariot suivant les revendications 5 et 7 prises ensemble, **caractérisé en ce que** le mécanisme à tiges comporte des biellettes (38A, 38B) adaptées pour être reliées aux moyens (30) de sollicitation dudit mécanisme et une barre de torsion (26) reliant les deux tringleries (20A, 20B) aux biellettes.

9. Chariot suivant l'une des revendications 7 ou 8, **caractérisé en ce que** les moyens de sollicitation (30) du mécanisme à tiges sont amovibles par rapport au châssis (2) et sont adaptés pour, en fonctionnement, être manoeuvrés au niveau de la partie arrière, par rapport au sens de déplacement (F ; F') du chariot (1), du châssis.

10. Chariot suivant l'une quelconque des revendication 7 à 9, **caractérisé en ce que** les moyens de sollicitation du mécanisme à tiges comportent une barre (30) de poussée du chariot selon un sens de déplacement (F ; F'), le mécanisme à tiges (20A, 20B, 28A, 288, 26, 34A, 34B, 38A, 38B) étant, dans sa configuration de repos, apte à empêcher sa sollicitation par ladite barre de poussée (30) tirée dans un sens opposé au sens de déplacement (F ; F').

## Claims

1. Truck for transporting loads, of the type comprising:
- a chassis (2) for supporting the load,
- wheels (4A, 4B) attached to the chassis (2) and adapted to support this chassis;
- braking means for the wheels, adapted to block the rotation of the wheels about their axis (X-X), said braking means comprising, for at least some of the wheels, a friction member (10A, 10B) for applying friction to the wheel (4A, 4B), which is movable between a blocking position in which it forms a frictional contact zone with the wheel and a retracted position in which it is remote from the wheel, and
- means for controlling the movement of the friction members between their retracted position and their blocking position,
wherein each friction member (10A, 10B) is essentially housed inside the corresponding wheel (4A, 4B),
**characterised in that** the control means comprise, for each friction member (10A, 10B), a rigid lever (16A, 16B) for moving the friction member, which is articulated on a rod mechanism (20A, 20B, 28A, 28B, 26, 34A, 34B, 38A, 38B) articulated relative to the chassis (2) between a resting configuration in which the friction member is in its blocking position and a biasing configuration in which the friction member is in its retracted position.

2. Truck according to claim 1, **characterised in that** the wheels (4A, 4B) provided with a friction member (10A, 10B) each comprise an inner drum (8A, 8B) the inner face of which forms a frictional contact zone with the friction member.

3. Truck according to claim 1 or 2, **characterised in that** each friction member comprises a pair of jaws (10A, 10B) connected to the chassis (2) and articulated relative to each other about an axis (12A, 12B) substantially parallel to the axis of rotation (X-X) of the corresponding wheel (4A, 4B).

4. Truck according to claim 3, **characterised in that** each lever (16A, 16B) for moving the friction members (10A, 10B) is provided with a cam (18A, 18B) bearing on the free ends of the articulated jaws.

5. Truck according to any one of the preceding claims, **characterised in that** the rod mechanism comprises two linkages (20A, 20B) each connecting the levers (16A, 16B) for moving the friction members on the wheels disposed on the same side of the truck (1), each of these linkages being provided with at least one compensating spring (24A, 24B).

6. Truck according to any one of the preceding claims, **characterised in that** the control means for moving the friction members (10A, 10B) comprise at least one member (22A, 22B) for resiliently restoring the rod mechanism (20A, 20B, 28A, 28B, 26, 34A, 34B, 38A, 38B) from its biasing configuration to its resting configuration, this restoring member being connected to the chassis (2).

7. Truck according to any one of the preceding claims, **characterised in that** the control means for moving the friction members (10A, 10B) further comprise biasing means (30) for the rod mechanism (20A, 20B, 28A, 28B, 26, 34A, 34B, 38A, 38B), adapted to control the travel of the rod mechanism (20A, 20B, 28A, 28B, 26, 34A, 34B, 38A, 38B) between its resting configuration and its biasing configuration.

8. Truck according to claims 5 and 7 taken together, **characterised in that** the rod mechanism comprises connecting rods (38A, 38B) adapted to be connected to the biasing means (30) for said mechanism and a torsion bar (26) connecting the two linkages (20A, 20B) to the connecting rods.

9. Truck according to one of claims 7 or 8, **characterised in that** the biasing means (30) for the rod mechanism are movable relative to the chassis (2) and are adapted to be manoeuvred, during operation, level with the rear part of the chassis, relative to the direction of travel (F; F') of the truck (1).

10. Truck according to any one of claims 7 to 9, **characterised in that** the biasing means for the rod mechanism comprise a bar (30) for pushing the truck in a direction of travel (F; F'), the rod mechanism (20A, 20B, 28A, 28B, 26, 34A, 34B, 38A, 38B) in its resting configuration being adapted to prevent it being acted upon by said push bar (30) pulled in a direction opposite to the direction of travel (F; F').

## Patentansprüche

1. Lasttransportkarren mit
- einem Gestell (2) zur Aufnahme der Last,
- Rädern (4A, 4B), die mit dem Gestell (20) verbunden und dazu ausgebildet sind, das Gestell abzustützen,
- Bremseinrichtungen für die Räder, die dazu ausgebildet sind, die Drehung der Räder um ihre Achse (X-X) zu blockieren und die wenigstens für bestimmte der Räder ein Reiborgan (10A, 10B) zur Reibung an dem Rad (4A, 4B) aufweisen, welches Reiborgan zwischen einer Bremsstellung, in der es eine Reibberührungszone mit dem Rad bildet, und einer Lösestellung beweglich ist, in der es von dem Rad abgerückt ist, und
- einer Einrichtung zur Steuerung der Verstellbewegung der Reiborgane zwischen ihrer Lösestellung und ihrer Bremsstellung,
wobei jedes Reiborgan (10A, 10B) im wesentlichen im Inneren des betreffenden Rades (4A, 4B) aufgenommen ist, **dadurch gekennzeichnet, daß** die Steuereinrichtung für jedes Reiborgan (10A, 10B) einen starren Hebel (16A, 16B) zum Verstellen des Reiborgans aufweist, der gelenkig mit einem Gestänge (20A, 20B, 28A, 28B, 26, 34A, 34B, 38A, 38B) verbunden ist, das in bezug auf das Gestell (2) gelenkig verstellbar ist zwischen einer Ruhekonfiguration, in der das Reiborgan sich in der Bremsstellung befindet, und einer Betätigungskonfiguration, in der das Reiborgan sich in der Lösestellung befindet.

2. Karren nach Anspruch 1, **dadurch gekennzeichnet, daß** die mit einem Reiborgan (10A, 10B) versehenen Räder (4A, 4B) jeweils eine innere Trommel (8A, 8B) aufweisen, deren Innenfläche eine Reibberührungszone mit dem Reiborgan bildet.

3. Karren nach Anspruch 1 oder 2, **dadurch gekennzeichnet, daß** jedes Reiborgan ein Paar Klauen (10A, 10B) aufweist, die mit dem Gestell (2) verbunden und um eine zur Drehachse (X-X) des betreffenden Rades (4A, 4B) parallele Achse (12A, 12B) relativ zueinander verschwenkbar sind.

4. Karren nach Anspruch 3, **dadurch gekennzeichnet, daß** jeder Hebel (16A, 16B) zum Verstellen der Reiborgane (10A, 10B) einen Nocken (18A, 18B) aufweist, der an den freien Enden der schwenkbaren Klauen anliegt.

5. Karren nach einem der vorstehenden Ansprüche, **dadurch gekennzeichnet, daß** das Gestänge zwei Stangen (20A. 20B) aufweist, die jeden der zum Verstellen der Reiborgane an den auf derselben Seite des Karrens (1) liegenden Räder dienenden Hebel (16A, 16B) verbinden, wobei jede dieser Stangen wenigstens einen federnden Dämpfer (24A, 24B) aufweist.

6. Karren nach einem der vorstehenden Ansprüche, **dadurch gekennzeichnet, daß** die Einrichtung zur Steuerung der Verstellbewegung der Reiborgane (10A, 10B) wenigstens ein elastisches Rückstellorgan (22A, 22B) zum Zurückstellen des Gestänges (20A, 20B, 28A, 28B. 26, 34A, 34B, 38A, 38B) aus einer Betätigungskonfiguration in Richtung auf seine Ruhekonfiguration aufweist, wobei dieses Rückstellorgan mit dem Gestell (2) verbunden ist.

7. Karren nach einem der vorstehenden Ansprüche, **dadurch gekennzeichnet, daß** die Einrichtung zur Steuerung der Stellbewegung der Reiborgane (10A, 10B) außerdem Mittel (30) zur Betätigung des Gestänges (20A, 2OB, 28A, 28B, 26, 34A, 34B, 38A, 38B) aufweisen, die dazu ausgebildet sind, den Übergang des Gestänges (20A, 20B, 28A, 28B, 26, 34A, 34B, 38A, 38B) zwischen seiner Ruhekonfiguration und seiner Betätigungskonfiguration zu steuern.

8. Karren nach den Ansprüchen 5 und 7 in Kombination, **dadurch gekennzeichnet, daß** das Gestänge Schaltstangen (38A, 38B) aufweist, die dazu ausgebildet sind, mit den Betätigungsmitteln (30) für das Gestänge verbunden zu werden, sowie einen Torsionsstab (26), der die beiden Stangen (20A, 20B) mit den Schaltstangen verbindet.

9. Karren nach Anspruch 7 oder 8. **dadurch gekennzeichnet, daß** die Mittel (30) zur Betätigung des Gestänges vom Gestell (2) abnehmbar und dazu ausgebildet sind, im Betrieb im in Bezug auf die Fortbewegungsrichtung (F; F') des Karrens (1) hinteren Bereich des Gestells betätigt zu werden.

10. Karren nach einem der Ansprüche 7 bis 9, **dadurch gekennzeichnet, daß** die Mittel zur Betätigung des Gestänges eine Schubstange (30) zum Schieben des Karrens in einer Fortbewegungsrichtung (F; F') aufweisen, wobei das Gestänge (20A. 20B, 28A, 28B, 26, 34A, 34B, 38A, 38B) in seiner Ruhekonfiguration in der Lage ist, seine Betätigung durch die genannte Schubstange (30) zu verhindern, wenn diese in der der Fortbewegungsrichtung (F; F') entgegengesetzten Richtung gezogen wird.
